# EUROPÄISCHE PATENTANMELDUNG

(11) **EP 1 635 584 A1**
(43) Veröffentlichungstag der Anmeldung: **15.03.2006**
(21) Anmeldenummer: 04077529.8
(22) Anmeldetag: 10.09.2004
(51) Int. Cl.: H04Q 7/22, H04H 1/00

(54) **Verfahren zum Übertragen von Daten an ein Kommunikationsendgerät**

(71) Anmelder: SIEMENS AKTIENGESELLSCHAFT, 80333 München (DE)
(72) Erfinder: Focke, Jürgen, 85630 Grasbrunn/Harthausen (DE)

(57) **Zusammenfassung**

Die Erfindung betrifft ein Verfahren zum Übertragen von Daten an ein Kommunikationsendgerät. Bei diesem Verfahren wird von dem Kommunikationsendgerät (KEG) eine Nachricht (N) empfangen, die mit einer Adresse des Kommunikationsendgeräts (KEG) adressiert ist. Auf den Empfang der Nachricht (N) hin wird ein Broadcastempfänger (BE) des Kommunikationsendgeräts angeregt, mittels eines Broadcastverfahrens ausgesendete Daten (D) zu empfangen.

## Beschreibung

Die Erfindung betrifft ein Verfahren zum Übertragen von Daten an ein Kommunikationsendgerät.

Zur Nutzung mit modernen Kommunikationsendgeräten (beispielsweise mit Mobiltelefonen) sind eine Vielzahl von Anwendungen oder Diensten bekannt, bei denen Daten von einem Datenanbieter an Kommunikationsendgeräte übertragen werden. Dazu werden üblicherweise Kommunikationsverbindungen zu den Kommunikationsendgeräten aufgebaut, und die zu übertragenden Daten werden über diese Kommunikationsverbindungen zu den Kommunikationsendgeräten übertragen. Beispielsweise bei Nutzung eines Mobilfunknetzes handelt es sich bei derartigen Kommunikationsverbindungen um Mobilfunkverbindungen.

Wenn gleichzeitig identische Daten an eine Vielzahl von Kommunikationsendgeräten übertragen werden sollen, dann werden die Datenübertragungseinrichtungen stark belastet, da die Daten parallel über eine Vielzahl von Kommunikationsverbindungen zu der Vielzahl von Kommunikationsendgeräten übertragen werden müssen. Die Datenübertragungseinrichtungen müssen deshalb unter Berücksichtigung solcher (möglicherweise nur bei sehr kurzzeitig auftretenden) Lastspitzen ausgelegt werden; dies erfordert einen beträchtlichen Aufwand.

Der Erfindung liegt die Aufgabe zugrunde, ein Verfahren anzugeben, mit dem Daten mit geringem Aufwand zuverlässig an Kommunikationsendgeräte übertragen werden können.

Diese Aufgabe wird erfindungsgemäß gelöst durch ein Verfahren zum Übertragen von Daten an ein Kommunikationsendgerät, wobei bei dem Verfahren von dem Kommunikationsendgerät eine Nachricht empfangen wird, die mit einer Adresse des Kommunikationsendgeräts adressiert ist, und auf den Empfang der Nachricht hin ein Broadcastempfänger des Kommunikationsendgeräts angeregt wird, mittels eines Broadcastverfahrens ausgesendete Daten zu empfangen. Dabei ist vorteilhaft, dass die (z. B. sehr umfangreichen) Daten mittels eines Broadcastverfahrens gleichzeitig an eine Vielzahl von Kommunikationsendgeräten übertragen werden können. Die Daten werden jedoch nur von denjenigen Kommunikationsendgeräten empfangen, welche die mit der Adresse des jeweiligen Kommunikationsendgerätes adressierte Nachricht empfangen. Diese Nachricht wirkt als eine Triggernachricht; durch den Empfang der Nachricht wird der Broadcastempfänger des Kommunikationsendgerätes dazu angeregt, die unabhängig von der Nachricht mittels des Broadcastverfahrens ziellos ausgesendeten Daten zu empfangen. Bei dem erfindungsgemäßen Verfahren werden mittels des Broadcastverfahrens die Daten gleichzeitig über ein gemeinsames Broadcastsignal so übertragen, dass viele Kommunikationsendgeräte diese gleichzeitig empfangen können. Damit wird vermieden, dass die Daten zu jedem einzelnen Kommunikationsendgerät über eine eigene Kommunikationsverbindung übertragen werden müssen. Dadurch ergibt sich ein sehr effektives und ressourcenschonendes Verfahren.

Als Nachricht kann beispielsweise eine SMS-Nachricht oder ein USSD-String verwendet werden. Eine SMS-Nachricht oder ein USSD-String lässt sich einfach und mit geringem Aufwand an ein Kommunikationsendgerät übertragen.

Die mittels des Broadcastverfahrens ausgesendeten Daten können Bilddaten und/oder Tondaten umfassen. Diese oftmals sehr umfangreichen Daten können mittels des Broadcastverfahrens auf eine effektive Weise gleichzeitig an viele Kommunikationsendgeräte übertragen werden.

Als Broadcastverfahren kann ein Rundfunkverfahren verwendet werden. Beispielsweise kann als Broadcastverfahren das als solches bekannte Digital-Audio-Broadcasting (DAB) verwendet werden. Bei den beiden vorgenannten Ausführungsformen des erfindungsgemäßen Verfahrens können vorteilhafterweise bereits existierende Rundfunkübertragungsanlagen, wie z. B. Funktürme, genutzt werden. Dadurch lässt sich das erfindungsgemäße Verfahren kostengünstig realisieren.

Das Verfahren kann auch so ablaufen, dass als Broadcastverfahren ein Fernsehübertragungsverfahren verwendet wird. Beispielsweise kann als Broadcastverfahren Digital-Video-Broadcasting (DVB) verwendet werden. Vorteilhafterweise kann bei diesen Ausgestaltungsformen des erfindungsgemäßen Verfahrens eine bereits bestehende Infrastruktur für Fernsehübertragungen, wie z. B. Fernsehtürme, verwendet werden.

Das erfindungsgemäße Verfahren kann so ablaufen, dass von dem Kommunikationsendgerät mit der Nachricht Beschreibungsdaten empfangen werden, welche die mittels des Broadcastverfahrens ausgesendeten Daten beschreiben, diese Beschreibungsdaten an den Broadcastempfänger übermittelt werden, und daraufhin von dem Broadcastempfänger die Daten empfangen werden. Mittels solcher Beschreibungsdaten (beispielsweise mittels einer Kennung der zu übertragenden Daten) kann der Broadcastempfänger aus einer Vielzahl mittels des Broadcastverfahrens übertragenen Daten die für das jeweilige Kommunikationsendgerät bestimmten Daten ermitteln.

Das erfindungsgemäße Verfahren kann auch so ablaufen, dass von dem Kommunikationsendgerät mit der Nachricht Empfangsparameter empfangen werden, welche den Empfang der mittels des Broadcastverfahrens ausgesendeten Daten betreffen, diese Empfangsparameter an den Broadcastempfänger übermittelt werden und daraufhin von dem Broadcastempfänger die Daten empfangen werden. Solche Empfangsparameter sind beispielsweise die Uhrzeit und/oder die Frequenz der Übertragung der Daten mittels des Broadcastverfahrens. Mittels dieser Empfangsparameter kann der Broadcastempfänger die für das Kommunikationsendgerät vorgesehenen Daten empfangen.

Das erfindungsgemäße Verfahren kann so ablaufen, dass von dem Kommunikationsendgerät die Daten in verschlüsselter Form empfangen werden. Damit kann wirkungsvoll verhindert werden, dass die mittels des Broadcastverfahrens übertragenen Daten von sich zufällig im Empfangsbereich der Broadcastübertragung befindenden Kommunikationsendgeräten unberechtigterweise genutzt werden können.

Das erfindungsgemäße Verfahren kann auch so ablaufen, dass von dem Kommunikationsendgerät mit der Nachricht ein Schlüssel empfangen wird, und von dem Kommunikationsendgerät mittels des Schlüssels die Daten entschlüsselt werden. Dadurch ist vorteilhafterweise nur dasjenige Kommunikationsendgerät, welches die Nachricht mit dem Schlüssel empfangen hat, in der Lage, die mittels des Broadcastverfahrens verschlüsselt ausgesendeten Daten zu entschlüsseln und zu nutzen.

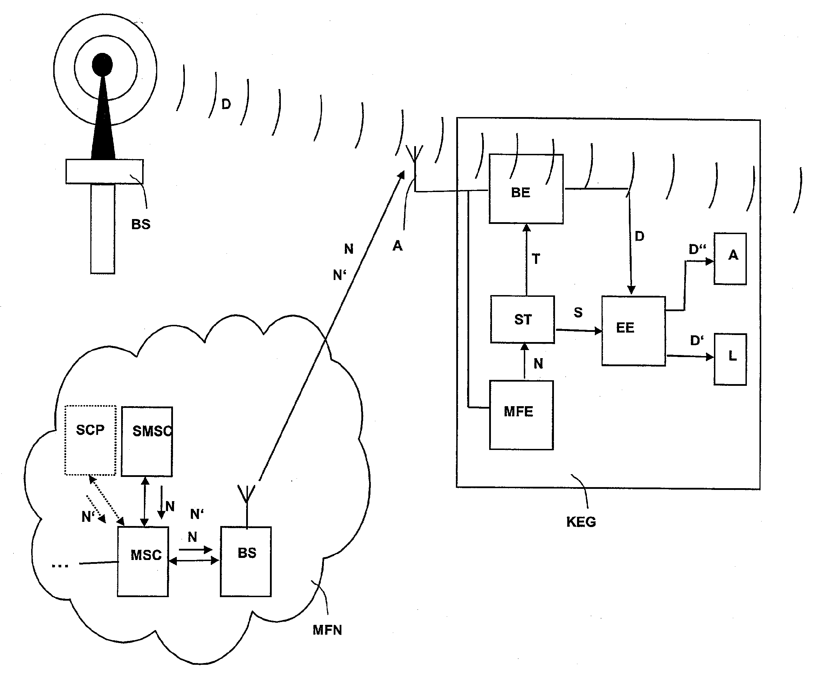

Zur weiteren Erläuterung der Erfindung wird mittels der Figur ein Ausführungsbeispiel des erfindungsgemäßen Verfahrens näher erläutert.

In der Figur ist schematisch ein Ausschnitt aus einem Mobilfunknetz MFN dargestellt. Bei diesem Mobilfunknetz MFN handelt es sich beispielsweise um ein Mobilfunknetz der 2. Generation (z. B. um ein GSM-Mobilfunknetz) oder um ein Mobilfunknetz der 3. Generation (beispielsweise um ein UMTS-Mobilfunknetz). Von diesem Mobilfunknetz ist lediglich eine Basisstation BS (BS = Base Station), eine Vermittlungsstelle MSC (MSC = Mobile Switching Center) und ein Servicezentrum SMSC (SMSC = Short Message Service Center) dargestellt.

Im rechten Teil der Figur ist ein Kommunikationsendgerät KEG in Form eines Mobiltelefons (beispielsweise eines GSM-Mobiltelefons der 2. Generation oder eines UMTS-Mobiltelefons der 3. Generation) dargestellt, welches eine von dem Mobilfunknetz MFN abgesendete Nachricht N empfangen kann.

Im linken oberen Teil der Figur ist eine Broadcastsendeeinrichtung BS dargestellt (beispielsweise ein in einem Fernsehturm installierter Fernsehsender), die Daten D in Form von Bilddaten und/oder Tondaten aussendet. Die Broadcastsendeeinrichtung BS sendet mittels eines Broadcastverfahrens die Daten D ziellos aus, so dass alle sich im Empfangsbereich der Broadcasteinrichtung befindenden Kommunikationsendgeräte diese Daten empfangen können. Insbesondere kann der Broadcastsender BS die Daten mittels eines Fernsehübertragungsverfahrens aussenden, z.B. mittels des an sich bekannten Digital-Video-Broadcasting-Verfahrens DVB-H. Die Daten können auch mittels eines Rundfunkverfahrens ausgesendet werden, beispielsweise mittels Digital-Audio-Broadcasting (DAB). Die Aussendung der Daten D erfolgt unabhängig davon, ob mittels des Mobilfunknetzes Nachrichten N an eines oder mehrere der sich im Empfangsbereich der Broadcasteinrichtung befindenden Kommunikationsendgeräte übertragen wird. Jedoch wird nur in denjenigen Kommunikationsendgeräten, welche die Nachricht N empfangen, ein Broadcastempfänger angeregt, die mittels des Broadcastverfahrens ausgesendeten Daten zu empfangen.

Im Ausführungsbeispiel ist der Fall dargestellt, dass von dem Mobilfunknetz MFN eine Nachricht N in Form einer SMS-Nachricht an das mobile Kommunikationsendgerät KEG übermittelt wird. Diese Nachricht N enthält Beschreibungsdaten, welche die mittels des Broadcastverfahrens ausgesendeten Daten beschreiben. Bei diesen Beschreibungsdaten handelt es sich im Ausführungsbeispiel um eine Kennung der mittels des Broadcastverfahrens zu dem Kommunikationsendgerät KEG zu übertragenden Daten, beispielsweise um einen Namen eines Datenstroms oder um einen Dateinamen. Zusätzlich oder alternativ enthält die Nachricht N Empfangsparameter, welche den Empfang der mittels des Broadcastverfahrens ausgesendeten Daten betreffen. Derartige Empfangsparameter sind beispielsweise die Uhrzeit, zu der die Daten mittels des Broadcastverfahrens ausgesendet werden oder die Frequenz, auf der die Daten mittels des Broadcastverfahrens ausgesendet werden. Optional kann die Nachricht N einen Schlüssel S (kryptographischer Schlüssel zur Datenentschlüsselung) enthalten, wenn die Daten mittels des Broadcastverfahrens in verschlüsselter Form ausgesendet werden. Dieser Schlüssel ermöglicht die Entschlüsselung der verschlüsselt ausgesendeten Daten.

Diese Nachricht N wird mit einer Adresse des Kommunikationsendgerätes KEG adressiert. Im Ausführungsbeispiel wird die SMS-Nachricht mit der Mobiltelefonnummer MSISDN (Mobile Station ISDN Number) des Mobiltelefons KEG adressiert.

Die die Beschreibungsdaten, die Empfangsparameter und ggf. den Schlüssel S enthaltende Nachricht N wird daraufhin von dem Servicezentrum SMSC über die Vermittlungsstelle MSC, die Basisstation BS und die Luftschnittstelle an das Kommunikationsendgerät KEG übertragen. Im Ausführungsbeispiel handelt es sich bei dem Kommunikationsendgerät KEG um ein Mobiltelefon, welches neben einer herkömmlichen Mobilfunkempfangseinrichtung MFE zusätzlich eine Broadcastempfangseinrichtung BE aufweist.

Die Nachricht N in Form der SMS-Nachricht wird von einer Antenne A des Kommunikationsendgerätes KEG empfangen und zu der Mobilfunkempfangseinrichtung MFE geleitet. Eine Steuereinrichtung ST liest aus der Nachricht N die Beschreibungsdaten und/oder die Empfangsparameter aus und ermittelt anhand der Beschreibungsdaten und/oder der Empfangsparameter die Art der zu empfangenden Daten und/oder den Zeitpunkt der Datenübertragung und/oder die für die Datenübertragung genutzte Frequenz. Die Steuereinrichtung ST erzeugt daraufhin ein Triggersignal T, mit welchem der Broadcastempfänger BE angeregt wird, die mittels des Broadcastverfahrens ausgesendeten Daten D zu empfangen. Dieses Triggersignal T wird von der Steuereinrichtung ST an den Broadcastempfänger übermittelt.

Dabei enthält das Triggersignal T die Beschreibungsdaten und/oder die Empfangsparameter. Durch das Triggersignal T wird der Broadcastempfänger eingeschaltet bzw. aktiviert. Sobald die Broadcastsendeeinrichtung BS die entsprechenden Daten mittels des Broadcastverfahrens an alle sich in ihrem Empfangsbereich befindenden Kommunikationsendgeräte aussendet, empfängt der Broadcastempfänger BE diese Daten D in verschlüsselter Form und leitet die verschlüsselten Daten D an eine Entschlüsselungseinrichtung EE des Kommunikationsendgeräts KEG weiter. Auf den Empfang der Nachricht N hin wird also der Broadcastempfänger BE zum Empfang der Daten D eingeschaltet.

Die Steuereinrichtung S liest aus der Nachricht N den Schlüssel S aus und übermittelt diesen Schlüssel S an die Entschlüsselungseinrichtung EE. Mittels des Schlüssels S entschlüsselt die Entschlüsselungseinrichtung EE die verschlüsselten Daten D. Die Entschlüsselungseinrichtung EE sendet entschlüsselte Bilddaten D" an eine Anzeigeeinheit A des Kommunikationsendgeräts KEG weiter; die Entschlüsselungseinrichtung EE sendet entschlüsselte Tondaten D' an eine Tonausgabeeinrichtung L (z.B. Lautsprecher) des Kommunikationsendgeräts weiter. Auf der Anzeigeeinheit A werden daraufhin mittels des Broadcastverfahrens übertragenen Daten in Form von z. B. bewegten Bildern (Videosequenzen) dargestellt. Über die Tonausgabeeinrichtung L werden die mittels des Broadcastverfahrens übertragenen Daten in Form von zu den Videodaten gehörenden Tondaten ausgegeben.

In einem anderen Ausführungsbeispiel kann als Nachricht N' auch ein USSD-String verwendet werden (USSD = Unstructured Supplementary Service Data). Ein derartiger USSD-String kann von einem in der Figur punktiert dargestellten Dienstesteuerungspunkt SCP (SCP = Service Control Point) eines eine Struktur eines Intelligenten Netzes IN (IN = Intelligent Network) aufweisenden Mobilfunknetzes erstellt werden. Dieser USSD-String N' wird von dem Dienstesteuerungspunkt SCP über die Vermittlungsstelle MSC und die Basisstation BS an das Kommunikationsendgerät KEG übertragen. Die Vermittlungsstelle MSC stellt in diesem Fall auch einen Dienstevermittlungspunkt SSP (SSP = Service Switching Point) des Intelligenten Netzes dar. Der weitere Verfahrensablauf mit der Nachricht N' entspricht dem oben beschriebenen Ablauf mit der Nachricht N.

Das beschriebene Verfahren kann mit Vorteil beispielsweise bei einem Mobilfunk-Datendienst angewendet werden, bei dem Videosequenzen von in Fußballspielen geschossenen Toren zeitnah nach ihrer Entstehung per Multimedia-Message MMS an Mobiltelefone übertragen werden. Dabei wird nur nach Torschüssen ein identischer Datensatz in Form einer MMS-Nachricht an die Kommunikationsendgeräte der Abbonenten des Dienstes übertragen.

Es wurde ein Verfahren beschrieben, mit dem mit geringem Aufwand und kostengünstig Daten D insbesondere an eine große Anzahl von Kommunikationsendgeräten übertragen werden können. Diese (oftmals eine große Datenkapazität aufweisenden) Daten in Form von beispielsweise Bilddaten oder Tondaten werden mittels eines Broadcastverfahrens ziellos an alle sich im Empfangsbereich der Broadcastübertragung befindenden Kommunikationsendgeräte übertragen. Nur in denjenigen Kommunikationsendgeräten, die eine an diese Kommunikationsendgeräte adressierte und mittels eines Kommunikationsnetzes (z.B. Mobilfunknetz) übermittelte Nachricht empfangen haben, wird ein Broadcastempfänger zum Empfang der Daten angeregt. Durch eine Verschlüsselung der mittels des Broadcastverfahrens ausgesendete Daten und ein Übertragen eines zugehörigen Schlüssels mittels der an das Kommunikationsendgerät adressierten Nachricht kann wirkungsvoll eine Nutzung der Daten durch Unberechtigte vermieden werden.

## Patentansprüche

1. Verfahren zum Übertragen von Daten an ein Kommunikationsendgerät, wobei bei dem Verfahren
- von dem Kommunikationsendgerät (KEG) eine Nachricht (N) empfangen wird, die mit einer Adresse des Kommunikationsendgeräts (KEG) adressiert ist, und
- auf den Empfang der Nachricht (N) hin ein Broadcastempfänger (BE) des Kommunikationsendgeräts (KEG) angeregt wird, mittels eines Broadcastverfahrens ausgesendete Daten (D) zu empfangen.

2. Verfahren nach Anspruch 1,
**dadurch gekennzeichnet, dass**
- als Nachricht (N) eine SMS-Nachricht verwendet wird.

3. Verfahren nach Anspruch 1 oder 2,
**dadurch gekennzeichnet, dass**
- als Nachricht (N) ein USSD-String verwendet wird.

4. Verfahren nach einem der vorhergehenden Ansprüche,
**dadurch gekennzeichnet, dass**
- die Daten (D) Bilddaten und/oder Tondaten umfassen.

5. Verfahren nach einem der vorhergehenden Ansprüche,
**dadurch gekennzeichnet, dass**
- als Broadcastverfahren ein Rundfunkverfahren verwendet wird.

6. Verfahren nach einem der vorhergehenden Ansprüche,
**dadurch gekennzeichnet, dass**
- als Broadcastverfahren Digital-Audio-Broadcasting verwendet wird.

7. Verfahren nach einem der vorhergehenden Ansprüche,
**dadurch gekennzeichnet, dass**
- als Broadcastverfahren ein Fernsehübertragungsverfahren verwendet wird.

8. Verfahren nach einem der vorhergehenden Ansprüche,
**dadurch gekennzeichnet, dass**
- als Broadcastverfahren Digital-Video-Broadcasting verwendet wird.

9. Verfahren nach einem der vorhergehenden Ansprüche,
**dadurch gekennzeichnet, dass**
- von dem Kommunikationsendgerät (KEG) mit der Nachricht (N) Beschreibungsdaten empfangen werden, welche die mittels des Broadcastverfahrens ausgesendeten Daten (D) beschreiben,
- diese Beschreibungsdaten an den Broadcastempfänger (BE) übermittelt werden, und
- daraufhin von dem Broadcastempfänger (BE) die Daten (D) empfangen werden.

10. Verfahren nach einem der vorhergehenden Ansprüche,
**dadurch gekennzeichnet, dass**
- von dem Kommunikationsendgerät (KEG) mit der Nachricht (N) Empfangsparameter empfangen werden, welche den Empfang der mittels des Broadcastverfahrens ausgesendeten Daten (D) betreffen,
- diese Empfangsparameter an den Broadcastempfänger (BE) übermittelt werden, und
- daraufhin von dem Broadcastempfänger (BE) die Daten (D) empfangen werden.

11. Verfahren nach einem der vorhergehenden Ansprüche,
**dadurch gekennzeichnet, dass**
- von dem Kommunikationsendgerät (KEG) die Daten (D) in verschlüsselter Form empfangen werden.

12. Verfahren nach einem der vorhergehenden Ansprüche,
**dadurch gekennzeichnet, dass**
- von dem Kommunikationsendgerät (KEG) mit der Nachricht (N) ein Schlüssel (S) empfangen wird, und
- von dem Kommunikationsendgerät (KEG) mittels des Schlüssels (S) die Daten (D) entschlüsselt werden.
